Europäisches Patentamt

European Patent Office

Office européen des brevets

(11) Publication number: **0 427 306 A2**

# EUROPEAN PATENT APPLICATION

(21) Application number: 90202678.0

(22) Date of filing: 09.10.90

(51) Int. Cl.5: **F16L 37/08**

(30) Priority: 10.11.89 IT 2207589 U

(43) Date of publication of application:
15.05.91 Bulletin 91/20

(84) Designated Contracting States:
AT BE CH DE ES FR GB IT LI LU NL SE

(71) Applicant: **CAZZANIGA S.p.A.**
**Via Mario Pagano 31**
**Milano(IT)**

(72) Inventor: **Cazzaniga, Luigi Angelo**
**c/o Cazzaniga S.p.A., Via Parco**
**Biassono (Milano)(IT)**

(74) Representative: **Raimondi, Alfredo, Dott. Ing.**
**Prof.**
**Dott. Ing. Prof. RAIMONDI ALFREDO S.r.l.**
**Piazzale Cadorna 15**
**I-20123 Milano(IT)**

(54) **Releasable pipe coupling with axial retaining nut.**

(57) Re-usable monoblock coupling for the sealed connection of smooth tubes to the threaded attachments of hydraulic and similar apparatuses, comprising a substantially cylindrical nut, provided at one end with a threading, capable of engaging with a corresponding threaded attachment, which nut possesses, inside it, a sealing body or elastomeric material, capable of being clamped between the nut and the threaded attachment, said nut possesses, at the end remote from that which can be engaged with the threaded attachment, an internally conical collar, inside which there is accommodated, in bearing against the sealing body, a radially elastically compressible chuck having internal sets of teeth capable of engagement with the surface of the tube as a consequence of the tightening of the nut on the threaded attachment

Fig.1

## RELEASABLE PIPE COUPLING WITH AXIAL RETAINING NUT

The connecting of smooth tubes, whether of metal or of plastics material, to threaded connecting members present on tubes or pipes, hydraulic, pneumatic or similar apparatuses, may be effected by coupling members adapted for fulfilling the function of assuring the hydraulic or pneumatic seal of the joint and, at the same time, of mechanically locking the smooth tube to the member to which it is connected.

Couplings of various classes are known, adapted for fulfilling said functions, but the known couplings in general have a structure composed of several parts to be connected to one another in succession, with the use of relatively complex assembly operations.

Italian Utility Model No. 22489 presents a coupling having a particularly convenient construction, formed as one unit and equipped with a sealing and mechanical retaining body of deformable material.

Such a coupling, nevertheless, is accompanied by the requirement for replacing the sealing body in the case of dismantling and re-assembly operations of the coupling, because the large amount of deformation imposed upon it for achieving not only the seal but also the mechanical holding, makes its complete elastic restoration for re-use impossible.

Moreover, the mechanical holding, being obtained solely by friction, may in some cases be insufficient and it is therefore desirable to have available a coupling capable of exerting a consistent mechanical holding force, independ ently of the hydraulic seal.

The requirement therefore arises for providing an improved coupling, which shall be capable of being re-used without requiring the replacement of one of its parts and which shall assure the desired mechanical locking.

Said results are achieved by the present invention, which provides a re-usable monoblock coupling for the sealed connection of smooth tubes to the threaded connecting members of hydraulic and similar apparatuses, comprising a substantially cylindrical nut equipped at one end with a threading capable of engaging with a corresponding threaded connecting member, which nut possesses, inside it, a sealing body of elastomeric material, capable of being clamped between the nut and the threaded connection, in which the nut possesses, at the end remote from that which can be engaged with the threaded connecting member, an internally conical collar, inside which there is housed, in bearing against the sealing member, a radially elastically compressible chuck having internal sets of teeth capable of engaging with the surface of the tube as a consequence of the tightening of the nut onto the threaded attachment.

The radially elastically compressible chuck has a plurality of axial slits, extending through a part of its length, and a conical external surface having a small angle of flare, said conical surface being in contact with the conical surface of the collar of the nut.

The flare angle of the external conical surface of the chuck is less than 45° and preferably less than 30°.

In the coupling according to this invention, moreover, there is present a tubular element resistant to the external pressure, capable of being inserted into the tube at its end and extending inside the tube until in correspondence with the internal teeth of the chuck, this tubular element being adapted for giving to the tube resistance to the radial compression applied by the tightening up of the chuck in the case where the wall of said tube does not have the necessary rigidity.

Further details will be apparent from the following description, prepared with reference to the attached drawings, in which there are shown:

in Figure 1, a coupling according to this invention, partly in axial section;

in Figure 2, the section on the plane II-II of Figure 1.

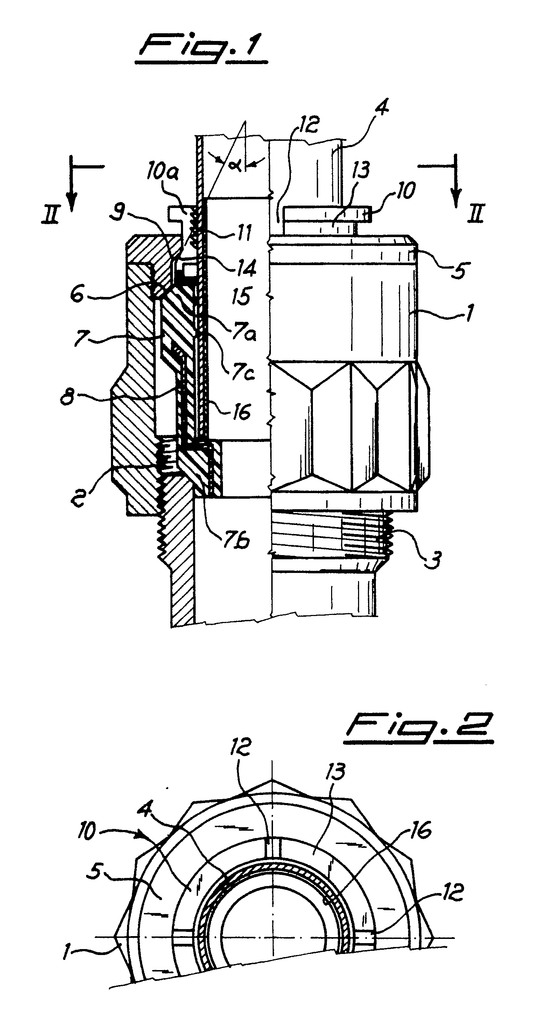

As the figures show, the coupling according to this invention is composed of an internally threaded nut 1, adapted to be screwed by its internal threading 2 onto the threaded attachment 3 forming part of the apparatus, to which it is desired to connect a tube or pipe 4. The end of the nut 1 possesses a collar 5 having an internal conical surface 6, which bears against the end 7a of a sealing body 7 of elastomeric material having an internal metal reinforcement 8. At the opposite end 7b, the sealing body 7 bears against the connection 3, while inside it, is accommodated the tube or pipe 4, the wall of which is in contact with the annular projections 7c of the internal surface of the sealing body; the tightening of the nut 1 onto the connection 3 enables a force to be applied onto the body 7 which causes its deformation towards the wall of the tube 4, generating between the annular projections 7c and the tube a compressive force which guarantees a seal against the operating pressure.

The collar 5, furthermore, possesses a further internal conical surface 9, which is in contact with a chuck 10, which surrounds the tube 4.

The chuck 10 has an end portion 10a having a plurality of annular sets of teeth 11 and equipped with axial slits 12, extending through a portion of the length of the chuck.

The slits 12 define strip-shaped portions 13, which are flexible towards the interior of the chuck in the presence of an axial loading applied onto the conical external surface 14 of the chuck by the collar 5, which is axially retained by bearing of its base portion 15 against the end of the sealing body 7.

The surface 14 of the chuck 10 is conical, with a small angle of flare $\alpha$ substantially less than 45° and preferably less than 30°: this makes it possible to have, in correspondence with a limited axial compression applied to the sealing body 7, a high radial loading applied to the chuck, suitable for enabling a bending of the strip-shaped portions 13, comprised between the slits 12, to be obtained which, in turn, causes engagement of the sets of teeth 11 with the surface of the tube 4 by plastic deformation of this tube, in this way generating a solid locking of the tube to the coupling.

An appropriate choice of the flare angle $\alpha$ of the conical surface 14, in relation to the shape of the sealing body 7 and to the elastic modulus of the material of which it is made, makes it possible to achieve, in correspondence with a determined value of deformation imparted to the sealing body 7, suitable for achieving the desired degree of seal against the pressure without damaging the elastomeric material, the preselected radial clamping value for the chuck, and therefore for mechanical locking of the tube.

It is therefore possible, in relation to specific requirements of use, of dimensioning or of material used, to have available couplings possessing suitable characteristics of sealing against the pressure and of mechanical holding of the tube, and also to vary, for a given coupling, the one or the other characteristic, by replacing the chuck or the sealing body by another of different dimensions.

It the case of dismantling, the removal of the nut 1 makes possible the elastic restoration of the chuck 10 into its undeformed position, disengaging it from the tube, which can then be easily pulled out from the coupling.

In the case in which the tube 4 is of metal material, or at any rate of a material adapted to offer sufficient rigidity against the external compression, this tube is introduced without further auxiliary components into the coupling; in the case, in contrast, in which the tube 4 is of plastics material having limited resistance to external compression, a metal tubular element 16 is provided, adapted to be inserted into the tube for imparting to it the necessary strength.

With the construction described, the function of sealing against the pressure and the function of mechanical holding of the tube are completely separated in the coupling; in particular the mechanical holding, being entrusted to the interference between the teeth of the chuck 10 and the wall of the tube, is of considerably greater value than that which would be possible by friction alone.

Because the material of the sealing body, furthermore, is not subjected to deformations greater than its elastic limit, it is not required to adopt permanent deformations and, therefore, it is possible to carry out several successive operations of assembling and dismantling the coupling, without replacement of damaged parts, for example for removing a radiator for maintenance in domestic heating installations and the like.

## Claims

1. Re-usable monoblock coupling for the sealed connection of smooth tubes to the threaded attachments of hydraulic and similar apparatuses, comprising a substantially cylindrical nut, provided at one end with a threading, capable of engaging with a corresponding threaded attachment, which nut possesses, inside it, a sealing body of elastomeric material, capable of being clamped between the nut and the threaded attachment, characterized by the fact that the nut possesses, at the end remote from that which can be engaged with the threaded attachment, an internally conical collar, inside which there is accommodated, in bearing against the sealing body, a radially elastically compressible chuck having internal sets of teeth capable of engagement with the surface of the tube as a consequence of the tightening of the nut on the threaded attachment.

2. Re-usable monoblock coupling according to Claim 1, characterized by the fact that the radially elastically compressible chuck has a plurality of axial slits, extending through a portion of its length, and a conical external surface having a small angle of flare, said conical surface being in contact with the conical surface of the collar of the nut.

3. Re-usable monoblock coupling according to Claim 2, characterized by the fact that the flare angle of the conical external surface of the chuck is less than 45° and preferably less than 30°.

4. Re-usable monoblock coupling according to Claim 1, characterized by the fact that a tubular element resistant to the external pressure is provided, this element being able to be inserted into the tube at its end, extending inside the tube as far as in correspondence with the internal sets of teeth of the chuck.

## _Fig.1_

## _Fig.2_